# EUROPÄISCHE PATENTANMELDUNG

(11) **EP 2 052 802 A1**
(43) Veröffentlichungstag der Anmeldung: **29.04.2009**
(21) Anmeldenummer: 09002240.1
(22) Anmeldetag: 27.01.2005
(51) Int. Cl.: B23K 11/00, B23K 11/02

(54) **Verfahren zum Verbinden zweier oder mehrerer metallischer Bleche oder Profilteile, insbesondere eines Karosseriesegments, sowie Karosseriesegment**

(30) Priorität: 27.01.2004 DE 102004003909
(62) Teilanmeldung aus: 05706705.0
(71) Anmelder: GM Global Technology Operations, Inc., Detroit, MI 48265-3000 (US)
(72) Erfinder: Eberlein,Wolfgang, 65193 Wiesbaden (DE)
(74) Vertreter: Strauss, Peter

(57) **Zusammenfassung**

Es wird ein Verfahren zum Verbinden zweier oder mehrerer Bleche oder Profilteile (1,2), von denen typischerweise eines aus einem höherfesten Stahl besteht, vorgestellt, wobei die Bleche oder Profilteile (1,2) unter Verwendung von wenigstens einem metallischen Verbindungsstück (6) zumindest an einer Stelle mit Hilfe eines form- und/oder kraftschlüssig wirkenden, mechanischen Fügeverfahrens zu einem Paket verbunden werden. Das Paket wird nach dem mechanischen Fügeverfahren im Bereich des wenigstens einen Verbindungsstückes einem Pressschweißvorgang unterworfen, wobei sich die Bestandteile des Pakets im Bereich der mindestens einen entstandenen Schweißstelle metallurgisch miteinander verbinden.

## Beschreibung

Die Erfindung betrifft ferner ein Verfahren zum Verbinden zweier oder mehrerer metallischer Bleche und/oder Profilteile. Die Erfindung betrifft insbesondere ein Verfahren zum Verbinden zweier oder mehrerer Bleche und/oder Profilteile, von denen zumindest eines aus einem höherfesten Stahl besteht. Das Verschweissen von Blechen und/oder Profilteilen, insbesondere das Pressschweissen von Blechen und/oder Profilteilen, ist ein besonders wirtschaftliches Verfahren, da es rasch und ohne grösseren apparativen Aufwand durchgeführt werden kann und dauerfeste stoffschlüssige Verbindungen ermöglicht.

Das Verschweissen lässt sich aber nur begrenzt anwenden, da eine Grundvoraussetzung dafür ist, dass die zu verschweissenden Materialien miteinander gut verschweissbar sind. Hauptsächlich sind gleiche oder im Wesentlichen gleiche Metalle und Metalllegierungen miteinander verschweissbar. Unterschiedliche Metalle oder Legierungen, beispielsweise Aluminium und Stahl oder Kupfer und Stahl, lassen sich nur sehr schwer oder überhaupt nicht verschweissen.

Ferner sind oftmals verschiedene Stahltypen untereinander aber auch gleiche Stahltypen miteinander nur schwierig verschweissbar, insbesondere wenn das Verschweissen über ein Pressschweissverfahren, wie z. B. Punktschweissen, Buckelschweissen oder Rollnahtschweissen, erfolgen soll.

Für die Verbindung von Blechen und/oder Profilteilen aus Metallen und Metalllegierungen sind neben dem Verschweissen aus dem Stand der Technik zahlreiche mechanische Verbindungsverfahren bekannt, beispielsweise das formschlüssige Verbinden über Nieten oder Schrauben. Diese Verfahren, die in der Regel mechanisch lösbare Verbindungen erzielen, weisen jedoch eine sehr schlechte Dauerfestigkeit auf, da in der Regel die eingebrachten Löcher zum Verschrauben bzw. zum Vernieten als mechanische "Kerben" wirken. Diese mechanischen "Kerben", die durch das Ausstanzen, das Durchbohren oder Schneiden der Löcher oder Schraubenlöcher entstehen, führen häufig zu Spannungsüberhöhungen, die bei einer Dauerbelastung zu einer raschen Materialermüdung führen können.

Eine Dauerfestigkeit, wie sie mit Schweissverbindungen erzielt wird, ist in der Regel mit formschlüssigen und/oder kraftschlüssigen mechanischen Verbindungen nicht möglich.

Des Weiteren hat sich insbesondere gezeigt, dass es eine ganze Reihe höherfester und höchstfester Stähle gibt, die sich nur schwierig verschweissen lassen. Insbesondere ist ein Verschweissen über Pressschweissen nur unter sehr genau definierten, schwierig einzuhaltenden Schweissbedingungen möglich.

Diese so genannten höherfesten und höchstfesten Stähle werden insbesondere im Automobilbau zur Erzielung von Leichtbaukarosseriesegmenten eingesetzt. Bei vergleichbaren Festigkeitsstufen können mit den höherfesten und höchstfesten Stählen beispielsweise höhere Dehnungswerte und damit eine wesentlich bessere Kaltumformbarkeit erreicht. Des Weiteren ist der Bereich der sicher einstellbaren Festigkeiten stark gegenüber konventionellen Stählen erweitert. Diese höherfesten und höchstfesten Stähle ermöglichen demnach eine Leichtbauweise, die durch eine Erhöhung der Festigkeitseigenschaften bei einer gleichzeitigen Blechdicken- bzw. Profildickenreduzierung ermöglicht wird.

Zu den in Rede stehenden höherfesten und höchstfesten Stählen gehören Stähle, die durch eine Mischkristallhärtung, durch eine Kornfeinung, durch eine Ausscheidungshärtung oder durch eine spezielle Form der Festigkeitssteigerung, dem so genannten "Press-Hardening"-Verfahren eingestellt werden. Bei dem letztgenannten Verfahren werden die in einem Werkzeug warmumgeformten Bleche oder Profilteile im Werkzeug abgeschreckt, so dass sich ein hoher Martensitanteil bildet.

Eine weitere wichtige Gruppe von höherfesten bzw. höchstfesten Stählen stellen die Mehrphasenstähle dar. Die Festigkeitssteigerung bei diesen Mehrphasenstählen wird dadurch erzielt, dass harte Phasen neben weichen Phasen in das Gefüge eingebracht werden.

Eine erste wichtige Gruppe dieser Mehrphasenstähle sind die sogenannten Dualphasen-Stähle, bei denen das Gefüge im Wesentlichen aus Ferrit mit einem Martensitanteil bis zu etwa 20% besteht.

Eine zweite wichtige Gruppe dieser Mehrphasenstähle stellen die so genannten Restaustenit-Stähle dar, die in einer Grundmatrix, die aus Ferrit und eingebettetem Bainit besteht, Restaustenitbestandteile enthalten, die bei der Umformung in harten Martensit umgewandelt werden. Diese Restaustenit-Stähle sind auch unter dem Namen TRIP-Stähle bekannt. Die Abkürzung "TRIP" steht dabei für "TRansformation Induced Plasticity".

Eine dritte Gruppe dieser Mehrphasenstähle stellen die so genannten Komplexphasen-Stähle dar. Hier liegen in den sehr feinkörnigen Gefügen in homogener Verteilung Feinstausscheidungen vor, so dass neben sehr harten Phasen, beispielsweise Martensit, weichere Gefügebestandteile vorliegen.

Eine vierte wichtige Gruppe sind die Ferrit-Bainit-Phasen-Stähle, die ein Gefüge aus Bainit und Ferrit aufweisen.

All diesen höherfesten oder höchstfesten Stählen ist aufgrund ihrer mehrphasigen und Sprödphasen enthaltenden Gefüge gemein, dass sie nur sehr schlecht verschweisst werden können. Insbesondere Stähle, die harte Phasen, wie sie Bainit und Martensit darstellen, enthalten oder bei denen durch das Schweissen solche harte Phasen vermehrt gebildet werden, sind nur schwierig mittels Pressschweissen, insbesondere mittels Punktschweissen, stoffschlüssig zu verbinden. In der Regel sammeln sich in den Schweisslinsengefügen zu hohe Anteile an Martensit und/oder Bainit, die zu einer Versprödung und damit zu einer eingeschränkten bzw. schlechten Dauerfestigkeit der Schweissstelle führen.

Darüber hinaus hat sich gezeigt, dass sich die oben genannten höherfesten Stähle nicht nur untereinander schwierig bzw. schlecht verschweissen lassen. Eine Schweissverbindung auch mit an sich gut verschweissbaren Stählen, z. B. konventionellen Weichstählen, ist ebenfalls nur eingeschränkt möglich. Auch hier zeigen sich des öfteren Risse, die einerseits an den Schweisspunktoberflächen aber auch im Inneren der Schweisslinsengefüge auftreten können.

Ferner weisen die höherfesten und höchstfesten Stähle ein (rück)federndes Verhalten auf, das beim Pressschweissen, insbesondere beim Punktschweissen zu Schwierigkeiten führen kann.

Diese Federeigenschaften erfordern einen erhöhten apparativen Aufwand. Durch die Rückfederung der höherfesten und höchstfesten Stähle entsteht zwischen den zu verschweissenden Blechen und/oder Profilen in der Regel ein Spalt. Dieser im Presswerk entstandene Spalt muss jedoch beim Pressschweissen, insbesondere beim Punktschweissen, durch eine starke Erhöhung der Punktschweisskräfte ausgeglichen werden. Dies erfordert ein Anpassen der auszuübenden Punktschweisskräfte in Abhängigkeit von den jeweils auszugleichenden Spaltdicken.

Das Zusammenpressen der rückfedernden Bleche oder Profilteile mit Hilfe der beim Pressschweissen bzw. beim Punktschweissen verwendeten Schweisszangen führt dazu, dass nach dem Punktschweissen der noch heisse und an sich noch nicht voll tragfähige Schweisspunkt die durch das Zusammenklemmen auftretenden Spannungen innerhalb der Bleche oder Profilteile auffangen muss. Um diese Aufgabe zu bewältigen müssen die Schweisszangen demnach über eine längere Nachhaltezeit geschlossen bleiben. Dies wiederum führt zu einer starken Verlängerung der Taktzeiten in der Fertigung. Eine Verlängerung der Taktzeiten wiederum bewirkt eine Verminderung des Durchsatzes in der Fertigungsstrasse. Eine Verminderung des Durchsatzes wiederum bewirkt eine Verteuerung des zu fertigenden Produktes.

Aufgabe der vorliegenden Erfindung ist es daher, ein neues Verfahren zum Verbinden zweier oder mehrerer Bleche und/oder Profilteile, insbesondere im automobilen Karosseriebau, bereitzustellen, von denen zumindest eines aus einem höherfesten Stahl besteht. Das Verfahren soll die oben genannten Schwierigkeiten überwinden, d. h. eine dauerfeste und fertigungssichere Schweissverbindung bereitstellen, wobei gleichzeitig die Schweisszeit gegenüber dem herkömmlichen Punktschweissen vermindert wird.

Erfindungsgemäss wird diese Aufgabe durch ein Verfahren zum Verbinden zweier oder mehrerer Bleche und/oder Profilteile gelöst, von denen zumindest eines aus einem höherfesten Stahl besteht, mit folgenden Schritten:
a) form- und/oder kraftschlüssiges mechanisches Verbinden der Bleche oder Profilteile an einer oder mehreren Verbindungsstellen und anschliessendes
b) thermisches Fügen der Verbindungsstellen mittels Pressschweissen

Mit diesem Verfahren ist es zum einen möglich, sehr rasch eine hervorragende stabile mechanische Verbindung zwischen den beiden zu verbindenden Blechen und/oder Profilteilen zu ermöglichen, so dass die im Presswerk aufgrund der Rückfederungseigenschaften des zu verarbeitenden höherfesten Stahls auftretenden Spalten effektiv und effizient geschlossen werden können und im anschliessenden Verschweissen der entstandenen Verbindungsstellen durch Pressschweissen das unökonomische und zeitaufwendige Nachjustieren der jeweils aufzuwendenden Punktschweisskräfte, die über die Schweisszangen ausgeübt werden müssen, zu vermeiden.

Mit diesem Verfahren können zum einen unterschiedliche Stahltypen untereinander verschweisst werden, von denen zumindest ein Stahltyp schlecht verschweissbar ist, wie es die höher- und höchstfesten Stähle sind. Zum anderen können selbstverständlich auch gleichartige Stahltypen, die schlecht verschweissbar sind, untereinander verbunden werden. Das Verfahren eignet sich demnach sowohl zum Verbinden von höherfesten und höchstfesten Stählen untereinander, aber auch zum Verbinden von höherfesten und höchstfesten Stählen mit konventionellen gut verschweissbaren Weichstählen.

Das Verfahren eignet sich darüber hinaus auch zum Verbinden von höherfestem Stahl mit anderen Metallen oder Metalllegierungen. Eine Verbindung ist insbesondere möglich von Aluminium mit höherfestem Stahl.

Insbesondere eignet sich das Verfahren mit den eingangs genannten Press-Hardening-Stählen, den Dualphasen-Stählen, den Ferrit-Bainit-Phasen-Stählen, den Restaustenit-Stählen, den Komplexphasen-Stählen sowie den Martensit-Phasen-Stählen.

In einer ersten Ausführungsform der vorliegenden Erfindung erfolgt das mechanische Verbinden mittels Durchsetzfügen. Das Durchsetzfügen ist auch unter dem Begriff "Clinchen" bekannt. Nachdem die zu verbindenden Bleche und/oder Profilteile mit einem Durchsetzfügepunkt versehen worden sind, wird in die Vertiefung des Durchsetzfügepunkts ein in der Regel plättchenartiges Schweissgut eingesetzt und der mit dem Schweissgut versehene Durchsetzfügepunkt wird anschliessend pressverschweisst.

In einer alternativen Ausführungsform der vorliegenden Erfindung erfolgt das mechanische Verbinden mit einem Verbindungsstück. Die Verbindungsstücke werden anschliessend beim Pressschweissen als Schweissgut benutzt. Eine Ausführungsform für dieses mechanische Verbinden ist das Vernieten. Eine andere Ausführungsform ist das Verschrauben. Die jeweils in die vorgestanzten Löcher eingebrachten Nieten und/oder Schrauben dienen dann beim anschliessenden Pressschweissen wiederum als Schweissgut.

Eine weitere Ausführungsform der vorliegenden Erfindung ist das form- und kraftschlüssige mechanische Verbinden der zu fügenden Bleche und/oder Profile durch Stanznieten. Die in die zu verbindenden Bleche und/oder Profilteile eingebrachten Stanznieten dienen wiederum beim anschliessenden Pressschweissen als Schweissgut.

Beim Verfahren nach der vorliegenden Erfindung ist es wichtig, dass die verwendeten Verbindungsstücke, das können beispielsweise die oben genannten Nieten, Schrauben oder Stanznieten sein bzw. das beim Durchsetzfügen verwendete Schweissgut, aus einem gut verschweissbaren Stahl besteht. Gut verschweissbare Stähle sind in der Regel Weichstähle, die ein rein ferritisches bzw. ein ferritisch-perlitisches Gefüge aufweisen, beispielsweise Stähle nach der Europäischen Norm EN 10130, insbesondere die Typen DC 04, DC 05 und DC 06.

Darüber hinaus können die Verbindungsstücke oberflächengehärtet sein, beispielsweise über eine Oberflächennitrierung, so dass ein besonders gutes Stanzverhalten erzielt wird, da die Stanznieten weniger stark plastisch verformt werden. Für die Oberflächenhärtung der Verbindungsstücke kommen neben der Oberflächennitrierung auch Glühen und anschliessendes Abschrecken in Betracht. Ebenso ist ein kurzzeitiges Induktionshärten oder Flammhärten der Verbindungsstücke an den Rändern denkbar.

Beim Stahltyp DC 06 handelt es sich um einen IF-Stahl, also um einen so genannten "Interstitial-Free"-Stahl. Bei IF-Stählen werden die mechanischen Eigenschaften durch die vollständige Abbindung der im Stahlwerk durch Vakuumbehandlung auf tiefste Gehalte abgesenkten Elemente Kohlenstoff und Stickstoff durch Mikrolegierung mit Niob und/oder Titan in Verbindung mit entsprechenden Walz- und Glühbedingungen erreicht.

Die Verbindungsstücke können ferner mit einer dünnen metallischen Beschichtung, z. B. aus Zink, Nickel oder Kupfer, versehen sein, welche die metallurgische Verbindung zu den zu fügenden Blechen und/oder Profilteilen verbessert. Insbesondere kann mit solchen Beschichtungen ein positiver Einfluss auf die Bildung von Mischverbindungen und/oder Diffusionsverbindungen im Bereich des Schweisslinsengefüges ausgeübt werden.

Das verwendete Pressschweissverfahren ist typischerweise das elektrische Widerstandsschweissen. Beim elektrischen Widerstandsschweissen ist wiederum das Punktschweissen bevorzugt. Es ist jedoch auch möglich, ein anderes elektrisches Widerstandsschweissverfahren zu verwenden, beispielsweise Buckelschweissen oder Rollnahtschweissen.

Das erfindungsgemässe Verfahren eignet sich ganz hervorragend im Bereich der Automobiltechnik und dort insbesondere bei der Herstellung von Karosseriesegmenten, die in Leichtbauweise mit höherfesten und/oder höchstfesten Stählen gefertigt werden sollen.

Es ist jedoch auch möglich das Verfahren bei andersartigen Aufgabenstellungen einzusetzen, beispielsweise im Schiffbau, im Militärbereich, im Bauwesen oder in speziellen Gebieten des Maschinenbaus, wo der Einsatz von höherfesten und/oder höchstfesten Stählen geboten ist.

Beim Einsatz im Karosseriebau können mit dem erfindungsgemässen Verfahren Karosseriesegmente in Leichtbauweise hergestellt werden, die sich dadurch auszeichnen, dass die typischerweise über Punktschweissen erzeugten Schweissverbindungspunkte zwischen den verarbeiteten höherfesten und höchstfesten Stählen rissfrei sind und sehr schnell und mit relativ wenig apparativem Aufwand hergestellt werden können.

Des Weiteren wird die Qualitätsprüfung der erzeugten Schweisspunkte erheblich vereinfacht, da die Schweisspunkte nahezu rein ferritische oder ferritisch-perlitische Schweisslinsengefüge mit geringen Anteilen an Bainit oder Martensit aufweisen, welche mit den bekannten Ultraschallprüfverfahren gut geprüft werden können, da diese Schweisslinsengefüge einen guten Kontrast zu den Gefügen der verschweissten Bleche oder Profilteile aufweisen.

Es hat sich nämlich gezeigt, dass das Ultraschallprüfverfahren zum Nachweis von Rissen im Bereich der Schweisspunktoberflächen und/oder des Schweisspunktinneren bei Punktschweissverbindungen von höherfesten und/oder höchstfesten Stählen aus dem Stand der Technik nur bedingt einsatzfähig ist. Durch eine Reihe von metallografischen Untersuchungen konnte im Mikroschliff des Schweisslinsengefüges und durch verschiedene Farbeindringverfahren verifiziert werden, das dort Risse auftraten, die im Ultraschallprüfverfahren nicht detektiert werden konnten.

Mit dem erfindungsgemässen Verfahren können demnach, in einer gegenüber dem Stand der Technik erhöhten Durchsatzzeit, Karosseriesegmente hergestellt werden, die auch eine gegenüber dem Stand der Technik stark erhöhte Fertigungssicherheit aufweisen. Das erfindungsgemässe Verfahren ermöglicht demnach nicht nur eine schnellere Fertigung, sondern auch eine wesentlich vereinfachte und schnellere Qualitätsprüfung der gefertigten Karosseriesegmente.

Darüber hinaus bietet die vorliegende Erfindung als weiteren Vorteil, dass im Vergleich zu den herkömmlich hergestellten Karosseriesegmenten, die höherfeste und/oder höchstfeste Stähle beinhalten, eine Reparatur defekter Schweissverbindungspunkte schnell und unproblematisch vorgenommen werden kann, da die Schweissverbindungen ohne Einhaltung eines sehr schwierig einzustellenden Schweissprozessfensters nachgebessert werden können. Dies eröffnet eine leichte und ökonomische Möglichkeit für Reparaturen sowohl in den Fertigungsstrassen, als auch bei der Reparatur bereits ausgelieferter Kraftfahrzeuge in den Reparaturwerkstätten.

Die Erfindung ist in der Zeichnung beispielsweise veranschaulicht und im nachstehenden im Einzelnen anhand der Zeichnung beschrieben. Es zeigen:
Figuren 1a) bis f) in schematischer Darstellung den Ablauf eines Verfahrens nach der vorliegenden Erfindung;
Figur 2a) das Schliffbild mit den charakteristischen Ausprägun gen einer Stanznietverbindung, die mit dem Verfahren aus den Figuren 1a bis e hergestellt worden ist und
Figur 2b) das Schliffbild mit den charakteristischen Ausprägungen einer Stanznietverbindung, die mit den Verfahrensschritten aus den Figuren 1a bis f hergestellt wurde.

Nach der Zeichnung werden zunächst ein erstes Blech 1 und ein zweites Blech 2 bereitgestellt, die aneinandergrenzen und ein Packet bilden. Sowohl das gezeigte erste Blech 1 als auch das gezeigte zweite Blech 2 bestehen hier aus einem höherfesten Stahl. Beide Bleche weisen eine Dicke von ca. 1,5 mm auf.

Das erste Blech 1 und das zweite Blech 2 werden dann in ein Stanznietsetzwerkzeug 3 eingeführt. Das Stanznietwerkzeug 3 besteht aus einer Zuführnase 4, in der ein Stempel 5 angeordnet ist. Die Zuführnase 4 führt den Stempel 5, wobei am unteren Ende des Stempels 5 eine Stanzniet 6 angeordnet ist. Die Zuführnase 4 mit dem darin befindlichen Stempel 5 und der geführten Stanzniet 6 befindet sich oberhalb des zu fügenden Pakets aus dem ersten Blech 1 und dem zweiten Blech 2. Unterhalb dieses zu fügenden Pakets befindet sich eine Matrix 7.

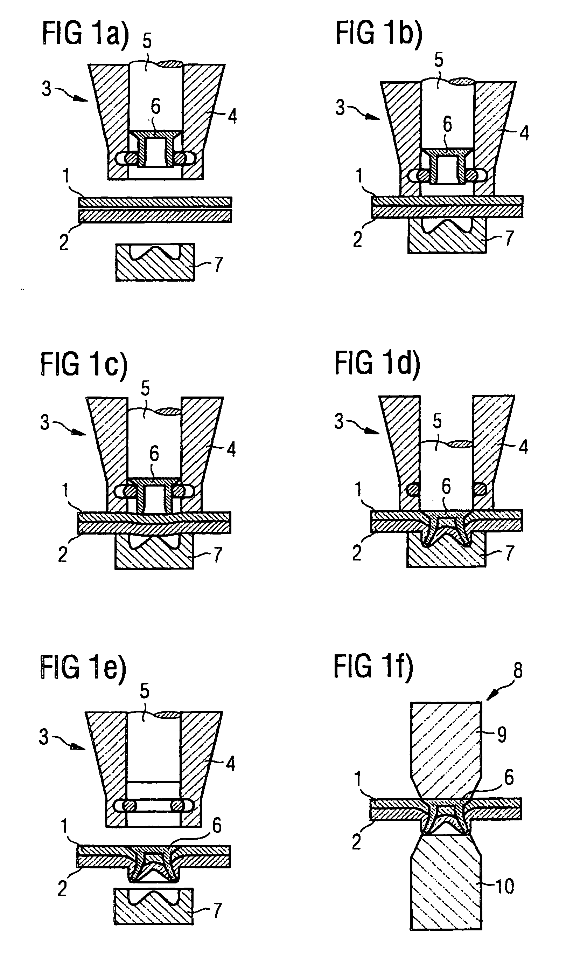

Nachdem das erste Blech 1 und das zweite Blech 2 in das Stanznietsetzwerkzeug 3 eingeführt worden sind, was in der Figur 1a gezeigt ist, wird das Paket durch die oben befindliche Zuführnase 4 und die unten befindliche Matrix 7 geklemmt. Dies ist in der Figur 1b gezeigt.

Danach wird der eigentliche Stanznietsetzprozess gestartet, was in der Figur 1c gezeigt ist. Dabei wird der zu setzende Stanzniet 6, der als Halbhohlniet ausgebildet ist, auf das erste Blech 1 gedrückt, so dass dieses erste Blech 1 durchstanzt wird. Der Stanznietsetzprozess endet damit, dass der Stanzniet 6 sich anschliessend in dem unteren zweiten Blech 2 aufspreizt, was in der Figur 1d gezeigt ist. Die beiden Bleche 1 und 2 sind danach form- und kraftschlüssig mechanisch miteinander verbunden.

Der hier verwendete Stanzniet besteht aus einem höherfesten IF-Stahl, also einem so genannten höherfesten "Interstitial-Free"-Stahl. Bei IF-Stählen werden die mechanischen Eigenschaften durch die vollständige Abbindung der im Stahlwerk durch Vakuumbehandlung auf tiefste Gehalte abgesenkten Elemente Kohlenstoff und Stickstoff durch Mikrolegierung mit Niob und/oder Titan in Verbindung mit entsprechenden Walz- und Glühbedingungen erreicht. Zur Festigkeitssteigerung werden Mangan und/oder Phosphor zulegiert.

Des Weiteren werden hier die Stanznietgeometrie, die Ausbildung der Matrix 7 und die ausgeübte Fügekraft auf die Werkstoffeigenschaften der zu fügenden Bleche 1 und 2 aus Restaustenit-Stahl abgestimmt.

Nach Herstellung der fertigen Stanznietverbindung wird die oberhalb des Pakets befindliche Zuführnase 4 mitsamt dem darin befindlichen Stempel 5 und die auf der Unterseite befindliche Matrix 7 von der Verbindungsstelle entfernt, was aus der Figur 1e zu ersehen ist.

Anschliessend werden die mit dem Stanzniet 6 versehenen Bleche 1 und 2 in eine Punktschweissapparatur 8 eingeführt. Die Punktschweissapparatur weist einen Netzanschluss (nicht gezeigt), eine Schweissstromquelle (nicht gezeigt) sowie zwei Kupferelektroden 9 und 10 auf.

Die Kupferelektroden 9 und 10 werden auf die Oberfläche des in dem Paket befindlichen Stanzniet 6 und auf die Unterseite des Stanzniet 6 enthaltende zweite Blech 2 aufgesetzt. Anschliessend wird das aus Stanzniet 6, erstem Blech 1 und zweitem Blech 2 bestehende Paket von den Kupferelektroden 9 und 10 formschlüssig vorgepresst, wobei durch den in der Schweissstromquelle befindlichen Transformator ein hoher Strom erzeugt wird, der das Paket erhitzt.

Aufgrund des relativ kleinen Durchmessers der Kupferelektroden 9 und 10 im Bereich der zu erzeugenden Schweissstelle wird der elektrische Strom durch einen sehr engen Querschnitt geführt. Durch den elektrischen Widerstand des Pakets wird dieser Effekt noch verstärkt. Sobald das Paket im Bereich der Stanzniet 6 in einen teigigen Zustand übergegangen ist, pressen die Kupferelektroden 9 und 10 das Paket zusammen, so dass es sich metallurgisch verbindet. Der elektrische Strom wird danach abgeschaltet und das Paket kühlt im Bereich der Schweissstelle ab. Anschliessend wird das verschweisste Paket aus der Punktschweissapparatur 8 entnommen.

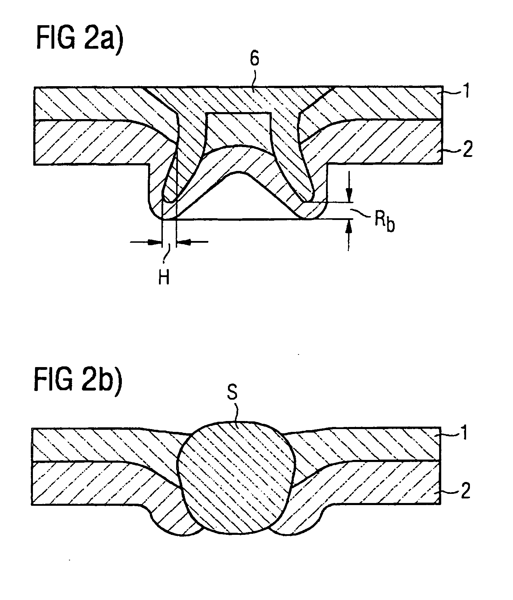

Die Figur 2a zeigt eine Stanznietverbindung im Schliff, bei der eine Stanzniete 6 mit Senkkopf verwendet worden ist. Aufgrund des Hinterschnitts H und der verbliebenen Restbodenstärke R_{b} ist über das in den Figuren 1a bis e durchgeführte Verfahren eine form- und kraftschlüssige mechanische Verbindung entstanden.

Nach Durchführen des Punktschweissen aus der Figur 1f geht diese form- und kraftschlüssige mechanische Verbindung in eine stoffschlüssige Verbindung über, deren Schliffbild in der Figur 2b gezeigt wird.

Das dort gezeigte Schweisslinsengefüge S ist in seinem Inneren aufgrund des verwendeten Stanzniets 6 aus höherfesten IF-Stahl nahezu bainit- und martensitfrei. Das Schweisslinsengefüge S ist hauptsächlich ein ferritisches oder ferritisch-perlitisches Gefüge.

Das Gefüge weist ferner an seinen Rändern, die zum ersten Blech 1 und zum zweiten Blech 2 weisen, Mischverbindungen und Diffusionsverbindungen auf. Das Gefüge an diesen Rändern stellt ein Erstarrungsgefüge dar.

Das gesamte Schweisslinsengefüge S besitzt eine hohe Duktilität und ist insbesondere im Inneren rissfrei. Im Vergleich zu den herkömmlichen Schweisslinsengefügen von punktgeschweissten höherfesten Stählen und/oder höchstfesten Stählen treten in diesen Schweisslinsengefügen S auch an den Oberflächen keine Risse auf.

### Bezugszeichenliste

- 1: erstes Blech
- 2: zweites Blech
- 3: Stanznietsetzwerkzeug
- 4: Zuführnase
- 5: Stempel
- 6: Stanzniet
- 7: Matrix
- 8: Punktschweissaparatur
- 9: erste Kupferelektrode
- 10: zweite Kupferelektrode

- H: Hinterschnitt
- R_{b}: Restbodenstärke
- S: Schweisslinsengefüge

## Patentansprüche

1. Verfahren zum Verbinden zweier oder mehrerer metallischer Bleche oder Profilteile, wobei die Bleche oder Profilteile unter Verwendung von wenigstens einem metallischen Verbindungsstück zumindest an einer Stelle mit Hilfe eines form- und/oder kraftschlüssig wirkenden, mechanischen Fügeverfahrens zu einem Paket verbunden werden, **dadurch gekennzeichnet, dass**
das Paket nach dem mechanischen Fügeverfahren im Bereich des wenigstens einen Verbindungsstückes einem Pressschweißvorgang unterworfen wird, wobei sich die Bestandteile des Pakets im Bereich der mindestens einen entstandenen Schweißstelle metallurgisch miteinander verbinden.

2. Verfahren nach Anspruch 1, wobei die Bleche oder Profilteile aus unterschiedlichen Stahltypen bestehen.

3. Verfahren nach Anspruch 1, wobei die Bleche oder Profilteile aus gleichen Stahltypen bestehen.

4. Verfahren nach Anspruch 1 oder 2, wobei wenigstens eines der Bleche oder Profilteile aus einem höherfesten Stahl, beispielsweise aus einem Press-Hardening-Stahl oder aus einem Dual-Phasen-Stahl oder aus einem Ferrit-Bainit-Phasenstahl gebildet ist.

5. Verfahren nach Anspruch 4, wobei der höherfeste Stahl ein Komplexphasen-Stahl oder ein Restaustenit-Stahl oder ein Martensit-Phasen-Stahl ist.

6. Verfahren nach einem der Ansprüche 1 bis 5, wobei das mechanische Verbinden durch Nieten oder Schrauben erfolgt und die Nieten oder Schrauben beim anschließenden Pressschweissen als Schweißgut dienen.

7. Verfahren nach einem der Ansprüche 1 bis 6, wobei das mechanische Verbinden durch Stanznieten erfolgt und die Stanznieten beim anschließenden Pressschweissen als Schweißgut dienen.

8. Verfahren nach einem der Ansprüche 1 bis 7, wobei das Schweißgut aus einem gut verschweißbarem Weichstahl besteht.

9. Verfahren nach einem der Ansprüche 1 bis 8, wobei das Pressschweißen durch elektrisches Widerstandsschweißen erfolgt.

10. Verfahren nach Anspruch 9, wobei das Pressschweißen durch Punktschweißen erfolgt.

11. Verwendung eines Verfahrens nach einem der Ansprüche 1 bis 10 zum Herstellen eines Karosseriesegments für ein Kraftfahrzeug.

12. Karosseriesegment für ein Kraftfahrzeug bestehend aus wenigstens zwei Blechen oder Profilteilen, wobei die Bleche oder Profilteile unter Verwendung von wenigstens einem metallischen Verbindungsstück zumindest an einer Stelle mit Hilfe eines form- und/oder kraftschlüssig wirkenden, mechanischen Fügeverfahrens zu einem Paket verbunden sind, **dadurch gekennzeichnet, dass** die Bleche oder die Profilteile im Bereich des wenigstens einen Verbindungsstückes zusätzlich pressverschweißt sind und dass der Werkstoff für das wenigstens eine Verbindungsstück so gewählt ist, dass das Paket im Bereich der mindestens einen entstandenen Schweißstelle metallurgisch verbunden ist.

13. Karosseriesegment nach Anspruch 12, **dadurch gekennzeichnet, dass**
zumindest eines der Profilteile oder Bleche aus einem Press-Hardening-Stahl oder einem Dualphasen-Stahl oder einem Ferrit-Bainit-Phasen-Stahl oder einem Restaustenit-Stahl oder einem Komplexphasen-Stahl oder einem Martensit-Phasen-Stahl besteht.

14. Karosseriesegment nach Anspruch 12 oder 13, wobei die verschweißten Verbindungsstellen im Inneren ihrer Schweißlinsengefüge ein im Wesentlichen bainitfreies und martensitfreies Gefüge aufweisen.

15. Karosseriesegment nach einem der Ansprüche 12 bis 14,
**dadurch gekennzeichnet, dass**
die Profilteile oder Bleche über Stanznieten form- und kraftschlüssig miteinander mechanisch verbunden sind und die Profilteile oder Bleche an den Stanznieten miteinander punktverschweißt sind.
